# EUROPEAN PATENT SPECIFICATION

(11) **EP 1 564 929 B1**
(45) Date of publication and mention of the grant of the patent: **10.12.2008**
(21) Application number: 05100939.7
(22) Date of filing: 10.02.2005
(51) Int. Cl.: H04L 12/18, H04L 12/56

(54) **Packet-data-based group communication**
Paketdaten-basierte Gruppenkommunikation
Communication de groupe en mode paquet de données

(30) Priority: 13.02.2004 FI 20040231
(43) Date of publication of application: 17.08.2005
(73) Proprietor: TeliaSonera Finland Oyj, 00510 Helsinki (FI)
(72) Inventor: Jokela, Harri, 00350, Helsinki (FI); Tuomela, Frans, 00640, Helsinki (FI)
(74) Representative: Smolander, Jouni Juhani

(56) References cited:
- US-A1- 2003 017 836
- US-A1- 2004 015 553
- US-A1- 2004 022 208
- US-B1- 6 426 956
- "Push-to-Talk over Cellular (PoC) User Plane; Transport Protocols; PoC Release 1.0;" 31 August 2003 (2003-08-31), ERICCSON, MOTOROLA, NOKIA, SIEMENS , XP002323430 Retrieved from the Internet: URL:http://communications.siemens.com/repo sitory/735/73503/PoC-User_Plane-1.1.0.pdf> Chapter 6.4.2 Link adaptation

## Description

### FIELD OF THE INVENTION

The invention relates to telecommunication systems, in particular to implementing packet-data-based group communication in telecommunication systems.

### BACKGROUND OF THE INVENTION

One special characteristic about mobile communication systems is group communication. Group communication, particularly with regard to voice calls, has traditionally been carried out in trunked mobile networks, such as PMR (Private Mobile Radio) networks, which are special mobile networks intended to be used by authorities and companies. Recently, however, solutions have been provided with which a group call can be implemented in public mobile networks or other public data networks. In this context, the term "group" refers to any predetermined group comprising two or more users or mobile terminal subscribers that are able to participate in the same group communication, typically the same group call. In PMR networks the mobile terminal subscribers of a given group typically belong to the same organization, whereas in solutions based on public mobile networks also private persons can establish talk groups of their own. One mobile terminal subscriber may naturally belong to a plurality of groups.

Packet-data-based group communication implementations have recently been developed for cellular networks, particularly GSM/GPRS/UMTS networks, for both voice and data calls. In these group communication implementations, the starting point is usually that the mobile system used provides only the telecommunication connection required, such as an IP connection, the actual implementation of the group communication service being configured as a separate user or application protocol level on top of the telecommunication connection used. Group communication services are typically implemented as VolP (Voice over IP) solutions. In such a case, the group communication application may be implemented as a client-server-solution in which the telecommunication network comprises a group communication server and applications used in terminals, functioning as the client. When used for a radiophone-type "push-to-talk" call, such a cellular network arrangement is generally called a PoC network (push-to-talk over cellular network).

Such a radiophone-type group call is usually based on "push-to-talk, release-to-listen" function, in which the group call is set up by pressing a tangent in the terminal, serving as a call switch. By pressing the tangent, the user indicates that he/she wishes to talk, and the terminal sends the service request to the network. The network either rejects the request or allocates the requested resources on the basis of predetermined criteria, such as the availability of the resources, the priority of the requesting user, etc. At the same time, a connection is established for all other active users in that subscriber group in which the terminal has presented the call request. After the call connection has been established, the requesting user can speak and the other users can listen on the channel. When the user releases the tangent, the user device signals the release message to the network, and the resources are released. Thus, the resources are reserved only during the actual speech event.

A problem with the above-described arrangement, in particular as implemented in a PoC network, is establishing and maintaining a group call in a case where the cellular network providing the telecommunication connection is congested. Typically, in a packet-data network comprised by a cellular network, such as in the GPRS network, the PoC traffic has not been prioritized, but the packet-data network may be controlled to transmit other packet-data traffic before the PoC traffic, or the PoC traffic may be equal traffic, i.e. what is called best-effort traffic, comparable to the Internet traffic. Furthermore, only a small part of the GSM networks is typically reserved for GPRS use, which easily leads to local congestion of the GPRS network, in which case not even the priorization of the PoC traffic eliminates the problems caused by the congestion. Thus, a user (subscriber A) belonging to a given PoC group and setting up a call does not succeed in delivering his/her messages (VolP voice packets) to the other group members, nor does he/she receive the messages from the other group members.

US 2003/0017836 discloses a system capable of providing IP-based group speech communication between mobile terminals. The system comprises a proxy switch switching group communications data between a base station system and a mobile switching center (MSC) or an alternative network, such as an IP network. The system is provided with speech-to-text conversion means.

### BRIEF DESCRIPTION OF THE INVENTION

An object of the invention is thus to provide a method and equipment implementing the method which would allow a group call to be established and maintained also when the load factor of the cellular network and/or packet data network is high. The object of the invention is achieved with a method, server, terminal and computer programs characterized by what is stated in the independent claims. Preferred embodiments of the invention are described in the dependent claims.

The invention is based on the idea that in a mobile communication system which comprises several terminals having, among themselves, formed at least one communication group, as well as at least one wireless access network and a packet data network connected to it, IP-based group speech communication is provided in which IP data packets are transmitted between the terminals and at least one server controlling the group speech communication. In the procedure according to the invention, an initiation request for IP-based group speech communication is sent by a terminal belonging to the communication group to the at least one server controlling the group speech communication. Then follows a check on at least one parameter determining the load situation of the access network and/or packet data network used by at least one terminal belonging to the communication group. If at least one parameter determining the load exceeds a predetermined limit value, a text-format communication connection, such as an instant messaging (IM) connection, is established between the terminal and a server unit functionally connected to at least one server controlling the group speech communication. In this case, the IP-based voice packets addressed to the terminal in question are converted into text-format IM messages and transmitted from the server unit via the IM connection to the terminal.

An advantage of the arrangement according to the invention is that the text-format IM messages are small in size compared with VolP voice packets, and thus they load the network considerably less than the VoiP packets. Thus, the IM messages are more likely to be delivered successfully in an overloaded network. The arrangement according to the invention enables the delivery of the messages also when the network capacity is so limited that the use of a PoC service would not be possible otherwise. Further, the above arrangement enables the terminal to continue to participate in the group speech communication despite the fact that it uses IM messages for this communication, which allows group members using different communication manners to be smoothly connected to each other.

In accordance with an embodiment of the invention, the check on the load situation and the conversion of the IP-based voice packets into text-format IM messages are carried out in a server unit functionally connected to the at least one server controlling the group speech communication.

In one embodiment of the invention, a setting which is defined by the terminal user and according to which the IP-based voice packets can be converted into text-format IM messages on the group speech communication connections of the terminal is stored to at least one server controlling the group speech communication. In such a case, the user can define himself/herself that he/she is willing to use the group communication service also as text-format IM messaging.

Alternatively, according to one embodiment of the invention, a mobile network or a server controlling the group speech communication can define a setting according to which the IP-based voice packets can be converted into text-format IM messages on the group speech communication connections of all terminals.

In accordance with one embodiment of the invention, the IP-based voice packets are converted into text-format IM messages by means of a speech recognition method.

In accordance with one embodiment of the invention, a chat session based on IM communication is established from the server unit with at least one terminal belonging to the communication group, after which the IP-based voice packets addressed to the terminal are converted into text-format chat messages in the server unit, the text-format chat messages from the terminal being converted into IP-based voice packets by synthesization.

In accordance with one embodiment of the invention, in the server unit the load situation of the access network and/or packet data network used by at least one terminal belonging to the communication group is observed continuously, and the group speech communication of the terminal is controlled dynamically to take place as IP-based voice packets or text-format IM messages in response to changes in the load situation without interrupting the connection of the terminal to the communication group.

In accordance with one embodiment of the invention, in response to the IP-based voice packets addressed to the terminal being converted into text-format IM messages, a packet data connection with lower QoS parameters is allocated for the terminal. Such a packet data connection is typically less expensive, but its quality is still sufficient for transmission of IM messages. At the same time, resources of the packet data network are saved.

### BRIEF DESCRIPTION OF FIGURES

The invention will now be described in greater detail in connection with preferred embodiments, referring to the attached drawings, of which:
Figure 1 shows the basic structure of a PoC network arrangement;
Figure 2 shows a PoC network arrangement in more detail in connection with a GSM/GPRS network, and an application server according to an embodiment;
Figure 3 shows a simplified signalling diagram of PoC session initiation, in which IM messages are defined to be used for subscriber B's connection; and
Figure 4 shows a simplified block diagram of a terminal according to an embodiment.

### DETAILED DESCRIPTION OF THE INVENTION

The present invention can be applied to any packet-based mobile system. The invention is particularly applicable to mobile systems based on a GPRS-type packet radio. Further, the invention can be applied to situations where part of the data transmission, for instance the data transmission of the PoC system part, takes place via a circuit-switched communication connection. In the following, preferred embodiments of the invention will be described with reference to the GPRS service and the UMTS or GSM system without restricting the invention to this particular packet radio system. The IP speech communication method used in the preferred embodiments is Voice over IP (VolP), but the invention is not restricted to this particular method.

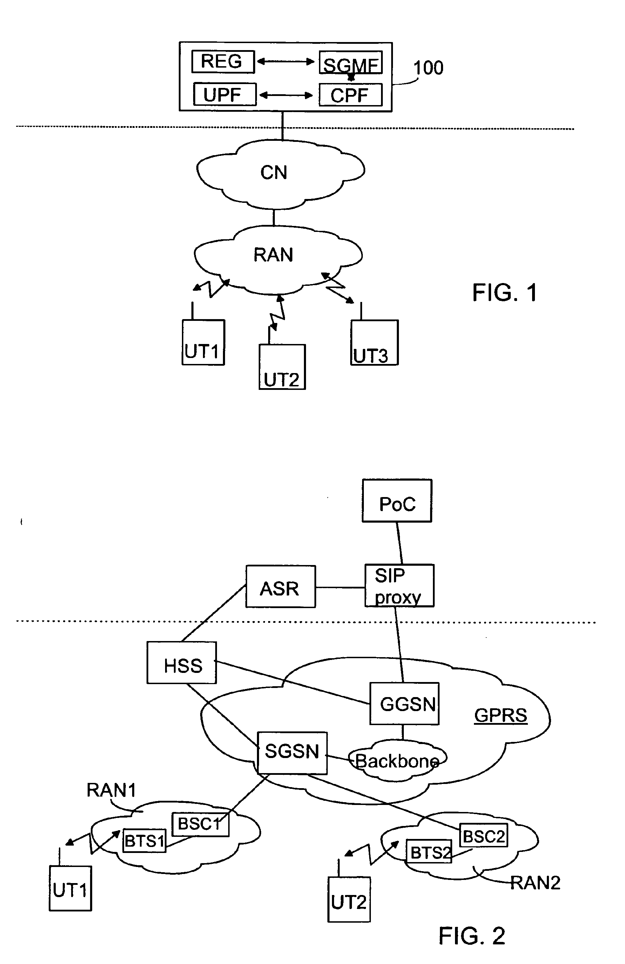

Figure 1 shows the basic structure of a PoC network arrangement on a general level. In Figure 1, on top of the mobile system a packet-data-based group communication service 100 is implemented in which the user plane functions UPF and the control plane functions CPF are differentiated from each other. The mobile network below comprises a core network CN and a radio access network RAN, to which the user terminals UT1 to UT3 have a radio frequency connection. The mobile network may be, for instance, a second-generation (2G) GSM/GPRS network or a third-generation (3G) UMTS network. Also a wireless local area network WLAN may function as the radio access network RAN. However, as regards the implementation of the PoC service, the type and structure of the mobile network used in the PoC network arrangement is not relevant, as far as the mobile network provides a packet-data-based communication connection for the PoC service. Hence, any packet-based mobile system may be used for implementing the network service.

The group communication service 100 can be implemented as a server system comprised in one or more servers, for example, the subscriber communication addressed to the subscriber system from terminals being arranged via proxies, because a PoC service does not typically allow direct end-to-end data transmission between the terminal and the servers. The PoC server system 100 comprises the user plane functions UPF and the control plane functions CPF as separate logical functions which communicate with PoC client applications of the terminals via a packet-data-based, typically IP-based, communication connection provided by the mobile network. This data transmission comprises both transmission of user information (voice/data packets) and signalling related to group communication. The logical functions of the server system 100 may be implemented with one server or divided in a suitable manner between several servers.

The task of the user plane functions UPF is to divide the voice/data packets between the terminals belonging to the group in accordance with their group definitions and other settings. The data transmission carried out by the UPF presupposes that the control plane functions CPF have first created and established logical user plane connections to other group members. A voice group call can be based on the VolP and/or RTP protocol (Real Time Protocol). As a principal rule, a PoC voice call functions in such a way that all voice packets from subscriber A are routed to the UPF function, which delivers the voice packets further to all subscribers B belonging to the group by using suitable data transmission technology, for example delivering the same packet to all recipients as one transmission (multicasting) or the same packet to all recipients as several different transmissions (multi-unicasting).

The control level functions CPF comprise control and management of a group call. This includes the above-mentioned creating, establishing and removing logical user plane connections group-specifically by using a suitable call control protocol, such as SIP (Session Initiation Protocol), adding and removing users to/from group definitions, and registering and authenticating users.

As one logical function, the PoC server system 100 may comprise a subscriber and group management function SGMF, which comprises the required functions for managing subscriber and group data and for allocating resources required by subscribers and groups. The SGMF transmits required data to CPF for example when group definitions are made. The subscriber and group management function SGMF may be controlled for instance via a WWW-based control interface, which can be used with known network browsers. The PoC server system 100 may further comprise a register (REG), to which the resource reservations of subscribers and groups defined in the SGMF are stored.

Figure 2, which shows above-described functionalities in more detail with reference to a GSM/GPRS network, also illustrates the application server according to the invention and its functioning. Figure 2 shows only some of the network elements included in the GSM/GPRS network. The GSM/GPRS network also comprises a large number of other network elements, but understanding the invention does not require them to be explained in this context.

As regards the GSM network, Figure 2 shows only two radio access networks RAN1 and RAN2 as access networks. Both radio access networks comprise at least one base station controller BSC and typically several base transceiver stations BTS connected to each base station controller BSC, the radio frequencies and channels available for the base transceiver stations being controlled by the base station controller BSC. The user terminals UT of the mobile network are connected via a radio path to the base transceiver stations BTS. The base station controllers BSC are, in turn, connected to both the circuit-switched GSM core network and the packet-switched GPRS network, only the GPRS system being described in more detail in this context.

The GPRS system connected to the GSM network comprises two nearly independent functions, i.e. a gateway GPRS support node GGSN and a serving GPRS support node SGSN. The GPRS network may comprise a plurality of gateway GPRS support nodes and serving GPRS support nodes, and typically several serving GPRS support nodes are connected to one gateway GPRS support node. Both nodes SGSN and GGSN function as routers that understand the mobility of the mobile terminal and attend to the control of the mobile system and the routing of the data packets irrespective of their position and the protocol used. The serving GPRS support node SGSN is connected to the mobile terminal UT via the mobile network. The connection to the mobile network (interface Gb) is typically established via a base station controller BSC and further to the mobile terminal UT via a radio frequency connection established from the base transceiver station. The task of the serving GPRS support node is to detect the mobile stations capable of GPRS connections in its service area, to send and transmit data packets from these mobile stations and to monitor the position of the mobile stations in its service area. The subscriber relationship information is stored to a home subscriber server HSS comprising GPRS information.

The gateway GPRS support node GGSN functions as a gateway between a GPRS network and an external packet data network PDN. The external packet data network may be, for example, the Internet, an X.25 network or a private local area network. GGSN may also be connected directly to a private company network or a host, as is done in the case of Figure 2 via an SIP proxy to a PoC server system. The data packets to be transmitted between the gateway GPRS support node GGSN and the serving GPRS support node SGSN are always GTP-encapsulated according to the GPRS standard (GPRS Tunneling Protocol). This means that the data packet is encapsulated in another data packet when it is transferred from one end of a tunnel to the other. The gateway GPRS support node GGSN also includes the PDP (Packet Data Protocol) addresses and the routing information, i.e. SGSN addresses, of the GPRS mobile stations. Routing information is thus used for linking data packets between the external data packet network and the serving GPRS support node SGSN. The gateway GPRS support node GGSN also unpacks the data packets received from the terminal UT and transmits them to the right data network. The GPRS backbone network between the gateway GPRS support node GGSN and the serving GPRS support node SGSN is a network utilizing the IP protocol (IPv4/IPv6).

Such a GSM/GPRS network known per se provides an IP-based communication connection for a PoC service, on top of which connection the PoC service itself is implemented as data transmission between a PoC server system and PoC client applications of terminals. GGSN is connected to the PoC server system via an SIP proxy for the data transmission of the PoC service, whereby the SIP proxy controls the VolP packets between the terminals and the PoC server system. In addition, Figure 2 shows an application server ASR according to the invention, connected to both an SIP proxy and a GPRS register HSS. The application server ASR may be a separate server, or its functions may be implemented as part of a server of the PoC server system.

In connection with the PoC service, one task of the application server ASR is to check settings of the terminals belonging to the PoC group in data transmission methods used for transmitting VolP voice packets. Thus, the terminal user may utilize the method according to the invention and store to the PoC server system, for instance to a register REG operated by the subscriber and group management function SGMF, a setting according to which the VolP voice packets are primarily transmitted as VolP RTP packets, but if required, the voice packets can be converted into text-format messages, such as instant messaging (IM) packets. In such a case, one task of the application server ASR is to carry out this conversion. It is also feasible that the PoC server system controls the application server ASR to check the connections of all terminals of the group and to carry out the conversion, if required. In this case, the conversion does not require settings stored by the user. Further, one task of the application server ASR is to observe the load of the data networks used by the terminals in a PoC session and to control the selection of the data transmission method used for transmitting the VolP voice packets on the basis of the load if the connection settings of the terminal allow alternative data transmission methods to be used.

IM messages are text-format messages transmitted via an IP-based connection directly between the communication parties. The intermediate network may be the public Internet or, for example, an operator's closed IP network. The IM server participates only in the set-up of a connection between the different communication parties, not in the actual transmission of IM messages, owing to which the IM messages are transferred with a very short delay nearly in real time. One IM function preferably applicable to the procedure according to the invention is what is called chat, where a predetermined group of terminals communicates with each other with IM messages in such a way that an IM message sent by one terminal is transmitted to all terminals of the group. It is particularly advantageous for the invention that the text-format IM messages are small in size compared with VolP voice packets, loading thus the network considerably less than VolP RTP packets. Thus, the delivery of the IM messages in an overloaded network is more likely to succeed.

It is to be noted that IM communication is, in this context, described only as an example of the text-format communication to be utilized in the invention. It is obvious to a person skilled in the art that any other text-format communication similar to IM can be used for this purpose. Further, it is to noted that the invention can also be applied in such a way that in addition to VolP-voice-packet-based PoC messages, messages containing image and video files are transmitted of which for instance only a text and an image or a mere text are filtered to be transmitted due to the congestion of the network. Correspondingly, the medium in sending may be a text or an image file of which a video is generated at the receiving end, the video comprising one image and a voice synthesized on the basis of the text.

The application server ASR is arranged to convert the VolP RTP packets into IM messages by means of speech recognition. Any speech recognition method may be used for recognizing speech, for example speaker-independent speech recognition applied to the most recent mobile stations, utilizing a pronunciation dictionary that comprises search words of which, in turn, each contains a text sequence or a phoneme sequence. On the basis of a phoneme sequence interpreted from the VolP RTP packets, a text sequence corresponding to the speech can be generated, which is to be transmitted as IM message(s).

In the following, the procedure and the functioning of the application server ASR according to the invention are described in a case where the GPRS network providing an IP-based communication connection for the PoC server is at least in some parts congested. It is assumed that the terminals UT1 and UT2 of Figure 1 belong to the same PoC group. It is further assumed that the user of the terminal UT2 has pre-stored in the PoC server system a setting in which the VolP RTP packets are defined as the primary PoC data transmission method but, if required, the voice packets can be converted into IM packets. At first, in the terminal UT1 (subscriber A) a PoC session is started by pressing the tangent in the terminal, whereby the terminal sends a service request to the network. The radio access network RAN1, controlled by the serving GPRS support node SGSN, allocates an uplink transmission path, for instance a dedicated packet-data channel and a time-slot frame, for the connection, and the GPRS network creates the GPRS context required for the connection. The GPRS network directs the PoC session establishment request to the SIP proxy, which transmits it further to the PoC server system.

Subsequently, the PoC server system presents a PoC group call request to all other active users (subscriber B) in the subscriber group in which the terminal UT1 has presented the call request, i.e. also to the terminal UT2. The PoC server system transmits the request of the terminal UT2 to the SIP proxy, which directs, on the basis of the settings of the terminal UT2, the request further to the application server ASR. The application server ASR establishes a connection to the database HSS and examines the current load of the radio access network RAN2 of the terminal UT2. The load of the radio access network can be determined for example as an average load in a given time-slot or as a momentary peak load, or in another appropriate manner. The load can thus be determined by means of one or more parameters for which a limit value has preferably been defined to detect load congestion.

If the load of the radio access network RAN2 proves to be high, in other words if the limit value of one of the parameters is exceeded, the system moves on, in accordance with the settings of the terminal UT2, to use IM messages instead of VolP RTP packets on the connection of the terminal UT2. This takes place in such a way that the application server ASR functions, with regard to the terminal UT2, as the end point of the PoC group call and as the starting point of a chat session. The application server ASR transmits a chat session request to the terminal UT2. When the chat session has been established between the application server ASR and the terminal UT2, the application server ASR converts the PoC voice packets addressed to the terminal UT2 into chat messages, and correspondingly, the chat messages from the terminal UT2 are synthesized into PoC voice packets to be transmitted as VolP RTP packets to the other terminals of the group. In this way, the terminal UT2 can still send and receive messages as part of the PoC group call. The terminal UT2 preferably comprises an application for receiving and writing/sending text-based chat messages.

If, on the connection of the UT2, the system moves on to use IM messages instead of VolP RTP packets, for example a connection with lower-quality QoS parameters can be allocated for the terminal UT2 from the GPRS network, this connection being sufficient for sending IM messages but not of sufficiently high quality to transmit VolP RTP packets in an error-free manner. However, such a connection with lower-quality QoS parameters is typically less expensive.

In accordance with one embodiment, the application server ASR can continuously observe the load of the data network and dynamically control the selection of the data transmission method of each terminal participating in a PoC group call on the basis of the load if the connection settings of the terminal allow alternative data transmission methods to be used. In this case, if, for example, congestion disappears from the network, the system can move on to use the PoC mode according to prior art for all terminals in the middle of a PoC session.

In accordance with one embodiment, also the terminal, for instance terminal UT2, may comprise means for carrying out speech recognition and/or for synthesizing speech on the basis of the IM messages received. In such a case, when it is his/her turn to speak, the user of the terminal UT2 can speak normally to the terminal microphone, after which the speech recognition algorithm of the terminal converts the speech into text-format and sends it further to the application server ASR as an IM message. Correspondingly, the text-format IM messages from the application server ASR can be converted in the terminal UT2 into synthesized voice, which is repeated to the user via the loudspeaker of the terminal UT2. Thus, for the most part, the use of IM messages only manifests itself for the user in the synthesized voice heard from the loudspeaker.

In accordance with one embodiment, the user can send messages by using text-format communication and receive, due to the network load, voice-format PoC messages as delayed if it is not desirable to use speech recognition and if the delayed PoC messages do not hinder the use of the application in question. This can be done when, for example, there is more capacity available in the downlink direction than in the uplink direction.

On the other hand, there may be situations where it is more critical to receive messages quickly, whereas the sending being real-time is not critical. Thus, according to one embodiment, the user can send PoC messages by using voice-format PoC communication and receive PoC messages in text-format due to the network load. In this case, the sending of PoC messages can be carried out as delayed, for instance by storing the message first to the terminal and sending it only gradually forwards. This can also be done when, for example, there is more capacity available in the uplink direction than in the downlink direction.

Thus, the load factor of the network can be monitored continuously, and, when given conditions are met, communication can be varied between the different forms described above in such a way that the procedure is smooth for the user and that the manner suitable for each particular case is selected according to preferences and parameters defined by the user or the operators.

In the above-described example, subscriber B's (UT2) radio access network RAN2 was presented as congested. If, however, already subscriber A's radio access network RAN1 turns out to be congested and the initiation of a PoC session in the PoC mode fails, the initiation of the PoC session by subscriber A can be fed as a text-format IM message, or the speech can be converted into an IM message by means of speech recognition in the terminal UT1.

The PoC server system may also comprise what is called a presence server PS, which is responsible for collecting terminals' property, presence and position information from different networks. Presence information (presences) on other terminals can be delivered from the presence server to a terminal. In accordance with one embodiment, this presence information can be utilized in such a way that for instance in the example of Figure 2, the presence information on the terminal UT2 show the other group members, particularly subscriber A (UT1) that the terminal UT2 is using IM messages in a PoC session due to congestion in the network. In addition, presence information can be utilized in such a way that information on the load factor of the network used by the terminal is transmitted to other group members, whereby already the sending party can preferably select the most optimal sending format on the basis of the current presence information. Such presence information is shown in an additional field displayed for this application only.

Thus, in the above embodiment, where the conversion between voice messages and text-based messages is carried out as early as in the terminals, the communication can be implemented directly between the terminals in such a way that the terminal itself or another component monitors the traffic and transmits information on it to the terminals, for instance on the basis of the presence information. The SGMF function of the PoC system can thus be used to find the group members and to maintain groups and their statuses.

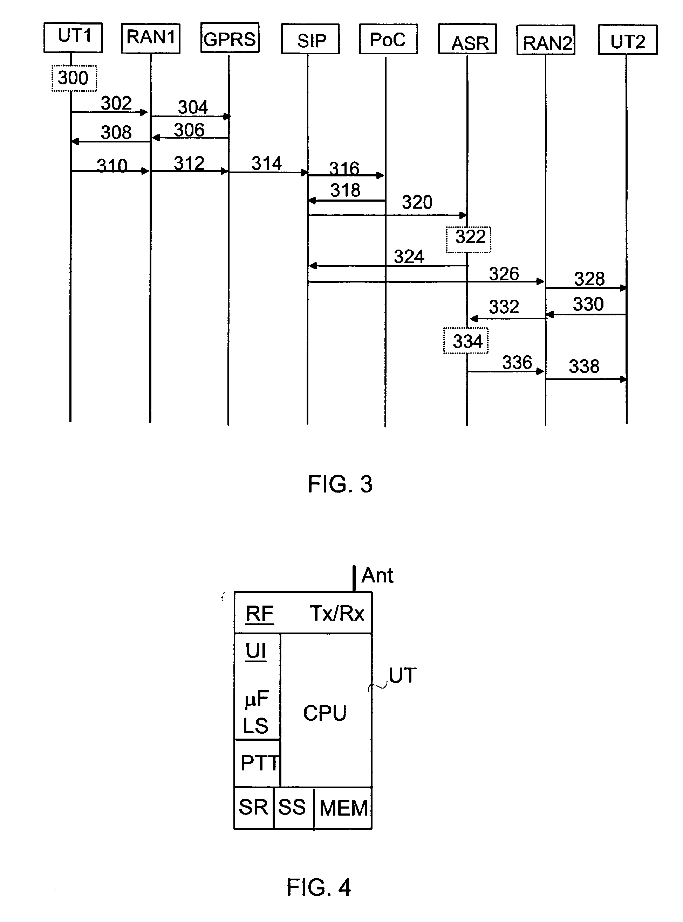

The procedure according to some embodiments of the invention can be illustrated with a simplified signalling diagram according to Figure 3, which shows initiation of a PoC session where IM messages are defined to be used for the connection of the terminal UT2. To illustrate the invention, for instance the functional entities RAN, GPRS and PoC are generalized in Figure 3 as separate functions without going into their internal signalling or data transmissions in detail, as these are obvious to a person skilled in the art and not relevant in order to understand the invention. Similarly, Figure 3 shows signalling related to a PoC session and a chat session in a simplified manner.

In Figure 3, the terminal UT1 functions as subscriber A, who starts a PoC session by pressing a tangent (300) in the terminal. The terminal UT1 sends a service request (302) to the network, which expresses that the terminal UT1 needs both an uplink radio transmission path and a GPRS context for a PoC session. The GPRS Attach request is directed from the radio access network RAN1 further to the GPRS network (304). The GPRS network creates, in a manner known as such, a GPRS context (306) required for the connection, the context being used via a dedicated packet data channel (308) allocated for the connection by the radio access network RAN1.

Creation of the GPRS context and the dedicated packet data channel is indicated to the terminal UT1 as a sign of the PoC channel being open and the subscriber of the terminal UT1 being able to start speaking. The terminal UT1 sends the first RTP message (310), which comprises the group call identifier of the terminal UT1 and the first VolP RTP voice packets. The radio access network RAN1 directs a PoC session initiation request to a GPRS network (312), which directs it further to a SIP proxy (314), which transmits the PoC session initiation request further to a PoC server system (316).

The PoC server system copies the packets and presents a PoC group call request to all other group members, attaching the IP addresses of the group members to the packets. Since the settings of the terminal UT2 determine that the network load is to be checked before setting up a PoC group call, also the IP address of the application server ASR is attached to the group call request of the terminal UT2. The PoC server system transmits the PoC group call requests to a SIP proxy (318), which directs the request, as regards the terminal UT2, further to an application server ASR (320). The application server ASR checks the current load (322) of the radio access network RAN2 from the database HSS. Since the load of the radio network RAN2 turns out to be high, the application server ASR guides the connection of the terminal UT2 to use IM messages.

For this purpose, the application server ASR sends to the SIP proxy a chat session request (324), which is directed further to the terminal UT2 (326, 328). The SIP proxy controls establishment of an online connection between the application server ASR and the terminal UT2, transmitting the IP address of the application server ASR. The IM application of the terminal subsequently establishes a direct connection to application servers ASR (330, 332). After this, the application server ASR converts (334) the PoC voice packets addressed to the terminal UT2 into chat messages and sends them to the terminal UT2 (336, 338) via the radio network.

Figure 4 shows the terminal UT according to one embodiment as a simplified block diagram. The terminal UT comprises a radio frequency block RF, which includes a transceiver Tx/Rx, which attends to the communication with a base transceiver station BTS via an antenna ANT. User interface means UI typically comprise a display, keyboard, microphone (µF) and loudspeaker (LS). Computer program code to be executed by a central processing unit CPU can be stored to a memory MEM comprised by the terminal UT. Call requests for a PoC group call are controlled with a switch PTT (tangent) that can also be implemented as voice activity detection VAD.

The terminal preferably comprises means for establishing an instant messaging (IM) connection to the application server ASR and means for sending and receiving IP data packets related to group speech communication. The functional logic of the terminal is typically implemented as a computer program code which controls the above -described simplified equipment assembly in a desired manner. Thus, also the above means can be implemented as a computer program code.

Further, the terminal may comprise means for carrying out speech recognition (SR) for the speech received at the microphone, and means (CPU) for generating a text-format IM message out of the data obtained as output of the speech recognition. The terminal may also comprise a speech synthesizer (SS) for generating voice out of the received IM message, the voice being repeated to the user through a loudspeaker (LS).

One computer program procedure characteristic of the terminal UT is a PoC client application known as such, which is responsible for all generating and unpacking of IP packets related to a PoC group call, as well as for inband and outband (SIP) signalling related to a PoC group call. Also, the different embodiments of the invention may, most preferably, be implemented in the terminal UT as a computer program code.

It will be obvious to a person skilled in the art that as the technology advances, the basic idea of the invention can be implemented in a plurality of different manners. The invention and its embodiments are thus not restricted to the above examples but may vary within the scope of the claims.

## Claims

1. A method for providing IP-based group speech communication in a mobile system comprising several terminals having, among themselves, formed at least one communication group, as well as at least one wireless access network and a packet data network connected to it for transmitting IP data packets between the terminals and at least one server controlling the group speech communication, the system being arranged to perform speech-to-text conversion, the method comprising the steps of:
sending (302) by a terminal belonging to the communication group an initiation request for IP-based group speech communication to the at least one server controlling the group speech communication, **characterized by**
checking (322) at least one parameter determining the load situation of the access network and/or packet data network used by at least one terminal belonging to the communication group;
in response to at least one load-determining parameter exceeding a predetermined limit value, establishing (324 to 332) a text-format communication connection between the terminal and a server unit functionally connected to the at least one server controlling the group speech communication;
converting (334) the IP-based voice packets addressed to the terminal into text-format messages; and
transmitting (336, 338) the text-format messages from said server unit via a text-format communication connection to the terminal.

2. A method according to claim 1, **characterized by**
carrying out the checking (322) of the load situation and the conversion (334) of the IP-based voice packets into text-format messages in the server unit functionally connected to the at least one server controlling the group speech communication.

3. A method according to claim 1 or 2, **characterized by**
storing to the at least one server controlling the group speech communication a setting defined by the terminal user according to which the IP-based voice packets can be converted into text-format messages on the group speech communication connections of the terminal.

4. A method according to claim 1 or 2, **characterized by**
storing to the at least one server controlling the group speech communication a setting according to which the IP-based voice packets can be converted into text-format messages on the group speech communication connections of all terminals.

5. A method according to any one of the preceding claims, **characterized by**
the text-format messages being instant messaging messages and the text-format communication connection being an instant messaging communication connection.

6. A method according to claim 5, **characterized by**
converting the IP-based voice packets into text-format IM messages by means of a speech recognition method.

7. A method according to claim 6, **characterized by**
establishing an IM-based chat session from the server unit with at least one terminal belonging to the communication group.

8. A method according to claim 7, **characterized by**
converting the IP-based voice packets addressed to the terminal into text-format chat messages in the server unit; and
converting in the server unit the text-format chat messages from the terminal into IP-based voice packets by synthesizing.

9. A method according to any one of the preceding claims, **characterized by**
observing continuously in the server unit the load situation of the access network and/or packet data network used by at least one terminal belonging to the communication group; and
controlling dynamically the group speech communication of the terminal to take place as IP-based voice packets or text-format messages in response to changes in the load situation without interrupting the connection of the terminal to the communication group.

10. A method according to any one of the preceding claims, **characterized by**
allocating, in response to the IP-based voice packets addressed to the at least one terminal being converted (334) into text-format messages, a packet data connection with lower QoS parameters for the terminal.

11. A method according to any one of the preceding claims, **characterized by**
transmitting to the other communication group members, as presence information of at least one terminal of the communication group, information that the terminal participates in the group speech communication with a text-format message.

12. A method according to any one of the preceding claims, **characterized by**
transmitting (302) by the terminal belonging to the communication group an initiation request for IP-based group speech communication as a text-format message to the at least one server controlling the group speech communication.

13. A mobile system comprising several terminals having, among themselves, formed at least one IP-based communication group for group speech communication, as well as at least one wireless access network and a packet data network connected to it for transmitting IP data packets between the terminals and at least one server controlling the group speech communication, in which mobile system speech-to-text conversion is arranged,
the terminal belonging to the communication group is arranged to send (302) an initiation request for IP-based group speech communication to the at least one server controlling the group speech communication, **characterized in that**
the mobile system comprises a server unit functionally connected to the at least one server controlling the group speech communication, the server unit being arranged
to check (322) at least one parameter determining the load situation of the access network and/or packet data network used by the terminal belonging to the communication group;
to establish (324 to 332), in response to at least one load-determining parameter exceeding a predetermined limit value, a text-format communication connection to the terminal;
to convert (334) the IP-based voice packets addressed to the terminal into text-format messages; and
to transmit (336, 338) the text-format messages via a text-format communication connection to the terminal.

14. A mobile system according to claim 13, **characterized in that**
the text-format messages are instant messaging (IM) messages and the text-format communication connection is an instant messaging (IM) communication connection.

15. A mobile system according to claim 14, **characterized in that**
the at least one server controlling the group speech communication is arranged to store a setting defined by the user according to which the IP-based voice packets can be converted into text-format IM messages on the group speech communication connections of the terminal.

16. A mobile system according to claim 14, **characterized in that**
the at least one server controlling the group speech communication is arranged to store a setting according to which the IP-based voice packets can be converted into text-format IM messages on the group speech communication connections of all terminals.

17. A mobile system according to any one of the claims 14 to 16, **characterized in that**
the server unit is arranged to convert the IP-based voice packets into text-format IM messages by means of a speech recognition method.

18. A mobile system according to claim 14 to 17, **characterized in that**
the server unit is arranged to establish an IM-based chat session with at least one terminal belonging to the communication group.

19. A mobile system according to claim 18, **characterized in that**
the server unit is arranged to convert the IP-based voice packets addressed to the terminal into text-format chat messages; and
the server unit is arranged to convert the text-format chat messages from the terminal into IP-based voice packets by synthesizing.

20. A mobile system according to any one of claims 14 to 19, **characterized in that** the server unit is arranged
to observe continuously at least one load situation of the access network and/or packet data network used by at least one terminal belonging to the communication group; and
to control dynamically the group speech communication of the terminal to take place as IP-based voice packets or text-format IM messages in response to changes in the load situation without interrupting the connection of the terminal to the communication group.

21. A mobile system according to any one of claims 14 to 20, **characterized in that**
in response to the IP-based voice packets addressed to the at least one terminal being converted (334) into text-format IM messages;
the mobile system is arranged to allocate a packet data connection with lower QoS parameters for the terminal.

22. A mobile system according to any one of claims 14 to 21, **characterized in that**
a presence server is arranged in functional connection to the at least one server controlling the group speech communication, whereby
the at least one server is arranged to transmit to the other communication group members, as presence information of at least one terminal of the communication group, information that the terminal participates in the group speech communication with an IM message.

23. A mobile system according to any one of claims 14 to 22, **characterized in that**
the terminal belonging to the communication group is arranged to send (302) an initiation request for IP-based group speech communication as an IM message to the at least one server controlling the group speech communication.

24. A server unit adaptable to a mobile system comprising several terminals having, among themselves, formed at least one IP-based communication group for group speech communication, as well as at least one wireless access network and a packet data network connected to it for transmitting IP data packets between the terminals and at least one server controlling the group speech communication, the system being arranged to perform speech-to-text conversion, **characterized in that**
the server unit is functionally connectable to the at least one server controlling the group speech communication, and the server unit is arranged, in connection with IP-based group speech communication,
to check (322) at least one parameter determining the load situation of the access network and/or packet data network used by at least one terminal belonging to the communication group;
to establish (324 to 332), in response to at least one load-determining parameter exceeding a predetermined limit value, a text-format communication connection to the terminal;
to convert (334) the IP-based voice packets addressed to the terminal into text-format messages; and
to transmit (336, 338) the text-format messages via a text-format communication connection to the terminal.

25. A server unit according to claim 24, **characterized in that**
the text-format messages are instant messaging (IM) messages and the text-format communication connection is an instant messaging (IM) communication connection.

26. A server unit according to claim 25, **characterized in that**
the server unit is arranged to receive from the at least one server controlling the group speech communication settings according to which the IP-based voice packets of the terminal used on the group speech communication connections can be converted into text-format IM messages.

27. A server unit according to claim 25 or 26, **characterized in that**
the server unit is arranged to convert the IP-based voice packets into text-format IM messages by means of a speech recognition method.

28. A server unit according to any one of claims 25 to 27, **characterized in that**
the server unit is arranged to establish an IM-based chat session with at least one terminal belonging to the communication group.

29. A server unit according to claim 28, **characterized in that**
the server unit is arranged to convert the IP-based voice packets addressed to the terminal into text-format chat messages; and
the server unit is arranged to convert the text-format chat messages from the terminal into IP-based voice packets by synthesizing.

30. A server unit according to any one of claims 24 to 29, **characterized in that** the server unit is arranged
to observe continuously at least one load situation of the access network and/or packet data network used by at least one terminal belonging to the communication group; and
to control dynamically the group speech communication of the terminal to take place as IP-based voice packets or text-format instant messaging messages in response to changes in the load situation without interrupting the connection of the terminal to the communication group.

31. A computer program product for controlling a server unit in connection with IP-based group speech communication, being adaptable to a mobile system comprising several terminals having, among themselves, formed at least one IP-based communication group for group speech communication, as well as at least one wireless access network and a packet data network connected to it for transmitting IP data packets between the terminals and at least one server controlling the group speech communication, the system being arranged to perform speech-to-text conversion, **characterized in that** the computer program product comprises
a computer program code for connecting the server unit functionally to the at least one server controlling the group speech communication;
a computer program code for checking at least one parameter determining the load situation of the access network and/or packet data network used by the terminal belonging to the communication group comprising several terminals;
a computer program code, which functions in response to at least one load-determining parameter exceeding a predetermined limit value, for establishing a text-format communication connection to the terminal;
a computer program code for converting the IP-based voice packets addressed to the terminal into text-format messages; and
a computer program code for transmitting the text-format messages via a text-format communication connection to the terminal.

## Patentansprüche

1. Verfahren zum Vorsehen einer IP-basierfien Gruppensprachkommunikation in einem Mobilsystem, das sowohl mehrere Endgeräte, die untereinander mindestens eine ausgebildete Kommunikationsgruppe aufweisen, als auch mindestens ein drahtloses Zugangsnetz und ein Paketdatennetz, das mit diesem verbunden ist, zum Senden von IP-Datenpaketen zwischen den Endgeräten und mindestens einem Server aufweist, der die Gruppensprachkommunikation steuert, wobei das System dazu vorgesehen ist, ein Wandeln von Sprache zu Text durchzuführen, wobei das Verfahren die Schritte aufweist:
Senden (302) einer Initialisierungsanforderung nach einer IP-basierten Gruppensprachkommunikation zu dem mindestens einen Server, der die Gruppensprachkommunikation steuert, durch ein Endgerät, das zu der Kommunikationsgruppe gehört, ***gekennzeichnet durch***
Überprüfen (322) mindestens eines Parameters, der die Lastsituation des Zugangsnetzes und/oder Paketdatennetzes bestimmt, die von dem mindestens einen Endgerät verwendet werden, das zu der Kommunikationsgruppe gehört;
Bilden (324 bis 332) einer Kommunikationsverbindung im Textformat zwischen dem Endgerät und einer Servereinheit, die funktional mit dem mindestens einen Server verbunden ist, der die Gruppensprachkommunikation steuert, als Reaktion auf den mindestens einen eine Last bestimmenden Parameter, der einen vorbestimmten Grenzwert überschreitet;
Wandeln (334) der IP-basierten Sprachpakete, die zu dem Endgerät adressiert sind, zu Nachrichten im Textformat; und
Senden (336, 338) der Nachrichten im Textformat von der Servereinheit über eine Kommunikationsverbindung im Textformat zu dem Endgerät.

2. Verfahren nach Anspruch 1, ***gekennzeichnet durch***
Ausführen des Überprüfens (322) der Lastsituation und des Wandelns (334) der IP-basierten Sprachpakete zu Nachrichten im Textformat in der Servereinheit, die funktional mit dem mindestens einen Server verbunden ist, der die Gruppensprachkommunikation steuert.

3. Verfahren nach Anspruch 1 oder 2, ***gekennzeichnet durch***
Speichern einer Einstellung, die **durch** den Endgerätenutzer definiert ist, gemäß weicher die IP-basierten Sprachpakete zu Nachrichten im Textformat auf den Gruppensprachkommunikationsverbindungen des Endgeräts gewandelt werden können, in dem mindestens einen Server, der die Gruppensprachkommunikation steuert.

4. Verfahren nach Anspruch 1 oder 2, ***gekennzeichnet durch***
Speichern einer Einstellung, gemäß welcher die IP-basierten Sprachpakete zu Nachrichten im Textformat auf den Gruppensprachkommunikationsverbindungen von allen Endgeräten gewandelt werden können, in dem mindestens einen Server, der die Gruppensprachkommunikation steuert.

5. Verfahren nach einem der vorhergehenden Ansprüche, ***gekennzeichnet durch***
die Nachrichten im Textformat, die Instant-Messaging-Nachrichten sind, und die Kommunikationsverbindung im Textformat, die eine Instant-Messaging-Kommunikationsverbindung ist.

6. Verfahren nach Anspruch 5, ***gekennzeichnet durch***
Wandeln der IP-basierten Sprachpakete zu IM-Nachrichten im Textformat **durch** ein Spracherkennungsverfahren.

7. Verfahren nach Anspruch 6, ***gekennzeichnet durch***
Bilden einer IM-basierten Chat-Sitzung von der Servereinheit mit mindestens einem Endgerät, das zu der Kommunikationsgruppe gehört.

8. Verfahren nach Anspruch 7, ***gekennzeichnet durch***
Wandeln der IP-basierten Sprachpakete, die zu dem Endgerät adressiert sind, zu Chat-Nachrichten im Textformat in der Servereinheit; und
Wandeln der Chat-Nachrichten im Textformat von dem Endgerät zu IP-basierten Sprachpaketen **durch** Synthetisieren in der Servereinheit.

9. Verfahren nach einem der vorhergehenden Ansprüche, ***gekennzeichnet durch***
kontinuierliches Überwachen der Lastsituation des Zugangsnetzes und/oder Paketdatennetzes, die von dem mindestens einen Endgerät verwendet werden, das zu der Kommunikationsgruppe gehört, in der Servereinheit; und
dynamisches Steuern der Gruppensprachkommunikation des Endgeräts, um als Reaktion auf Änderungen der Lastsituation ohne Unterbrechen der Verbindung des Endgeräts zu der Kommunikationsgruppe als IP-basierte Sprachpakete oder Nachrichten im Textformat stattzufinden.

10. Verfahren nach einem der vorhergehenden Ansprüche, ***gekennzeichnet durch***
Zuweisen einer Paketdatenverbindung mit kleineren QoS-Parametern für das Endgerät als Reaktion darauf, dass die IP-basierten Sprachpakete, die zu dem mindestens einen Endgerät adressiert sind, zu Nachrichten im Textformat gewandelt werden (334).

11. Verfahren nach einem der vorhergehenden Ansprüche, *gekenntzeichnet durch*
Senden einer Information, dass das Endgerät an der Gruppensprachkommunikation teilnimmt, mit einer Nachricht im Textformat zu den anderen Kommunikationsgruppenmitgliedern als eine Vorhandenseinsinformation des mindestens einen Endgeräts der Kommunikationsgruppe.

12. Verfahren nach einem der vorhergehenden Ansprüche, ***gekennzeichnet durch***
Senden (302) einer Initialisierungsanforderung nach einer IP-basierten Gruppensprachkommunikation als eine Nachricht im Textformat zu dem mindestens einen Server, der die Gruppensprachkommunikation steuert, **durch** das Endgerät, das zu der Kommunikationsgruppe gehört.

13. Mobilsystem, das sowohl mehrere Endgeräte, die untereinander mindestens eine ausgebildete IP-basierte Kommunikationsgruppe aufweisen, als auch mindestens ein drahtloses Zugangsnetz und ein Paketdatennetz, das mit diesem verbunden ist, zum Senden von IP-Datenpaketen zwischen den Endgeräten und mindestens einem Server aufweist, der die Gruppensprachkommunikation steuert, wobei in diesem Mobilsystem ein Wandeln von Sprache zu Text vorgesehen ist,
wobei das Endgerät, das zu der Kommunikationsgruppe gehört, dazu vorgesehen ist, eine Initialisierungsanforderung nach einer IP-basierten Gruppensprachkommunikation zu dem mindestens einen Server zu senden (302), der die Gruppensprachkommunikation steuert, ***dadurch gekennzeichnet, dass***
das Mobilsystem eine Servereinheit aufweist, die funktional mit dem mindestens einen Server verbunden ist, der die Gruppensprachkommunikation steuert, wobei die Servereinheit dazu vorgesehen ist,
mindestens einen Parameter zu prüfen (322), der die Lastsituation des Zugangsnetzes und/oder Paketdatennetzes bestimmt, die von dem Endgerät verwendet werden, das zu der Kommunikationsgruppe gehört;
als Reaktion auf mindestens einen eine Last bestimmenden Parameter, der einen vorbestimmten Grenzwert überschreitet, eine Kommunikationsverbindung im Textformat zu dem Endgerät zu bilden (324 bis 332);
die IP-basierten Sprachpakete, die zu dem Endgerät adressiert sind, zu Nachrichten im Textformat zu wandeln (334); und
die Nachrichten im Textformat über eine Kommunikationsverbindung im Textformat zu dem Endgerät zu senden (336, 338).

14. Mobilsystem nach Anspruch 13, ***dadurch gekennzeichnet, dass***
die Nachrichten im Textformat Instant-Messaging-(IM)-Nachrichten sind und die Kommunikationsverbindung im Textformat eine Instant-Messaging-(IM)-Kommunikationsverbindung ist.

15. Mobilsystem nach Anspruch 14, ***dadurch gekennzeichnet, dass***
der mindestens eine Server, der die Gruppensprachkommunikation steuert, dazu vorgesehen ist, eine Einstellung zu speichern, die durch den Nutzer definiert ist, gemäß welcher die IP-basierten Sprachpakete zu IM-Nachrichten im Textformat auf den Gruppensprachkommunikationsverbindungen des Endgeräts gewandelt werden können.

16. Mobilsystem nach Anspruch 14, ***dadurch gekennzeichnet, dass***
der mindestens eine Server, der die Gruppensprachkommunikation steuert, dazu vorgesehen ist, eine Einstellung zu speichern, gemäß welcher die IP-basierten Sprachpakete zu IM-Nachrichten im Textformat auf den Gruppensprachkommunikationsverbindungen von allen Endgeräten gewandelt werden können.

17. Mobilsystem nach einem der Ansprüche 14 bis 16, ***dadurch gekennzeichnet, dass***
die Servereinheit dazu vorgesehen ist, die IP-basierten Sprachpakete durch ein Spracherkennungsverfahren zu IM-Nachrichten im Textformat zu wandeln.

18. Mobilsystem nach einem der Ansprüche 14 bis 17, ***dadurch gekennzeichnet, dass***
die Servereinheit dazu vorgesehen ist, eine IM-basierte Chat-Sitzung mit mindestens einem Endgerät zu bilden, das zu der Kommunikationsgruppe gehört.

19. Mobilsystem nach Anspruch 18, ***dadurch gekennzeichnet, dass***
die Servereinheit dazu vorgesehen ist, die IP-basierten Sprachpakete, die zu dem Endgerät adressiert sind, zu Chat-Nachrichten im Textformat zu wandeln; und
die Servereinheit dazu vorgesehen ist, die Chat-Nachrichten im Textformat von dem Endgerät zu IP-basierten Sprachpaketen durch Synthetisieren zu wandeln.

20. Mobilsystem nach einem der Ansprüche 14 bis 19, ***dadurch gekennzeichnet, dass*** die Servereinheit dazu vorgesehen ist,
mindestens eine Lastsituation des Zugangsnetzes und/oder Paketdatennetzes kontinuierlich zu überwachen, die von dem mindestens eine Endgerät verwendet werden, das zu der Kommunikationsgruppe gehört; und
die Gruppensprachkommunikation des Endgeräts dynamisch zu steuern, um als Reaktion auf Änderungen der Lastsituation ohne Unterbrechen der Verbindung des Endgeräts zu der Kommunikationsgruppe als IP-basierte Sprachpakete oder IM-Nachrichten im Textformat stattzufinden.

21. Mobilsystem nach einem der Ansprüche 14 bis 20, ***dadurch gekennzeichnet, dass*** als Reaktion auf die IP-basierten Sprachpakete, die zu dem mindestens einen Endgerät adressiert sind, diese zu IM-Nachrichten im Textformat gewandelt werden (334);
das Mobilsystem dazu vorgesehen ist, eine Paketdatenverbindung mit einem kleineren QoS-Parameter für das Endgerät zuzuweisen.

22. Mobilsystem nach einem der Ansprüche 14 bis 21, ***dadurch gekennzeichnet, dass***
ein Vorhandenseinsserver in funktionaler Verbindung zu dem mindestens einen Server vorgesehen ist, der die Gruppensprachkommunikation steuert, wodurch
der mindestens eine Server dazu vorgesehen ist, eine Information, dass das Endgerät an der Gruppensprachkommunikation teilnimmt, mit einer IM-Nachricht zu den anderen Gruppenmitgliedern als eine Vorhandenseinsinformation des mindestens einen Endgeräts der Kommunikationsgruppe zu senden.

23. Mobilsystem nach einem der Ansprüche 14 bis 22, ***dadurch gekennzeichnet, dass***
das Endgerät, das zu der Kommunikationsgruppe gehört, dazu vorgesehen ist, eine Initialisierungsanforderung nach einer IP-basierten Gruppensprachkommunikation als eine IM-Nachricht zu dem mindestens einen Server zu senden (302), der die Gruppensprachkommunikation steuert.

24. Servereinheit, die an einem Mobilsystem anwendbar ist, das sowohl mehrere Endgeräte, die untereinander mindestens eine ausgebildete IP-basierte Kommunikationsgruppe für eine Gruppensprachkommunikation aufweisen, als auch mindestens ein drahtloses Zugangsnetz und ein Paketdatennetz, das mit diesem verbunden ist, zum Senden von IP-Datenpaketen zwischen den Endgeräten und mindestens einem Server aufweist, der die Gruppensprachkommunikation steuert, wobei das System dazu vorgesehen ist, ein Wandeln von Sprache zu Text durchzuführen, ***dadurch gekennzeichnet, dass***
die Servereinheit funktional mit dem mindestens einen Server verbindbar ist, der die Gruppensprachkommunikation steuert, und die Servereinheit dazu vorgesehen ist, in Verbindung mit der IP-basierten Gruppensprachkommunikation
mindestens einen Parameter zu prüfen (322), der die Lastsituation des Zugangsnetzes und/oder Paketdatennetzes bestimmt, die von dem mindestens einen Endgerät verwendet werden, das zu der Kommunikationsgruppe gehört;
als Reaktion auf mindestens einen eine Last bestimmenden Parameter, der einen vorbestimmten Grenzwert überschreitet, eine Kommunikationsverbindung im Textformat zu dem Endgerät zu bilden (324 bis 332);
die IP-basierten Sprachpakete, die zu dem Endgerät adressiert sind, zu Nachrichten im Textformat zu wandeln (334); und
die Nachrichten im Textformat über eine Kommunikationsverbindung im Textformat zu dem Endgerät zu senden (336, 338).

25. Servereinheit nach Anspruch 24, ***dadurch gekennzeichnet, dass***
die Nachrichten im Textformat Instant-Messaging-(IM)-Nachrichten sind und die Kommunikationsverbindung im Textformat eine Instant-Messaging-(IM)-Kommunikationsverbindung ist.

26. Servereinheit nach Anspruch 25, ***dadurch gekennzeichnet, dass***
die Servereinheit dazu vorgesehen ist, von dem mindestens einen Server, der die Gruppensprachkommunikation steuert, Einstellungen zu empfangen, gemäß welchen die IP-basierten Sprachpakete des verwendeten Endgeräts zu IM-Nachrichten im Textformat auf den Gruppensprachkommunikationsverbindungen gewandelt werden können.

27. Servereinheit nach Anspruch 25 oder 26, ***dadurch gekennzeichnet, dass***
die Servereinheit dazu vorgesehen ist, die IP-basierten Sprachpakete durch ein Spracherkennungsverfahren zu IM-Nachrichten im Textformat zu wandeln.

28. Servereinheit nach einem der Ansprüche 25 bis 27, ***dadurch gekenntzeichnet, dass***
die Servereinheit dazu vorgesehen ist, eine IM-basierte Chat-Sitzung mit mindestens einem Endgerät zu bilden, das zu der Kommunikationsgruppe gehört.

29. Servereinheit nach Anspruch 28, ***dadurch gekennzeichnet, dass***
die Servereinheit dazu vorgesehen ist, die IP-basierten Sprachpakete, die zu dem Endgerät adressiert sind, zu Chat-Nachrichten im Textformat zu wandeln; und
die Servereinheit dazu vorgesehen ist, die Chat-Nachrichten im Textformat von dem Endgerät zu IP-basierten Sprachpaketen durch Synthetisieren zu wandeln.

30. Servereinheit nach einem der Ansprüche 24 bis 29, ***dadurch gekennzeichnet, dass*** die Servereinheit dazu vorgesehen ist,
mindestens eine Lastsituation des Zugangsnetzes und/oder Paketdatennetzes kontinuierlich zu überwachen, die von dem mindestens eine Endgerät verwendet werden, das zu der Kommunikationsgruppe gehört; und
die Gruppensprachkommunikation des Endgeräts dynamisch zu steuern, um als Reaktion auf Änderungen der Lastsituation ohne Unterbrechen der Verbindung des Endgeräts zu der Kommunikationsgruppe als IP-basierte Sprachpakete oder Instant-Messaging-Nachrichten im Textformat stattzufinden.

31. Computerprogrammprodukt zum Steuern einer Servereinheit in Verbindung mit einer IP-basierten Gruppensprachkommunikation, die an einem Mobilsystem anwendbar ist, das sowohl mehrere Endgeräte, die untereinander mindestens eine ausgebildete IP-basierte Kommunikationsgruppe für eine Gruppensprachkommunikation aufweisen, als auch mindestens ein drahtloses Zugangsnetz und ein Paketdatennetz, das mit diesem verbunden ist, zum Senden von IP-Datenpaketen zwischen den Endgeräten und mindestens einem Server aufweist, der die Gruppensprachkommunikation steuert, wobei das System dazu vorgesehen ist, ein Wandeln von Sprache zu Text durchzuführen, ***dadurch gekennzeichnet, dass*** das Computerprogrammprodukt aufweist
einen Computerprogrammcode zum funktionalen Verbinden der Servereinheit mit dem mindestens einen Server, der die Gruppensprachkommunikation steuert;
einen Computerprogrammcode zum Überprüfen mindestens eines Parameters, der die Lastsituation des Zugangsnetzes und/oder Paketdatennetzes bestimmt, das von dem Endgerät verwendet wird, das zu der Kommunikationsgruppe gehört, die mehrere Endgeräte aufweist;
einen Computerprogrammcode, welcher als Reaktion auf den mindestens einen eine Last bestimmenden Parameter, der einen vorbestimmten Grenzwert überschreitet, zum Bilden einer Kommunikationsverbindung im Textformat zu dem Endgerät dient;
einen Computerprogrammcode zum Wandeln der IP-basierten Sprachpakete, die zu dem Endgerät adressiert sind, zu Nachrichten im Textformat; und
einen Computerprogrammode zum Senden der Nachrichten im Textformat über eine Kommunikationsverbindung im Textformat zu dem Endgerät.

## Revendications

1. Procédé pour délivrer une communication vocale de groupe basée sur le protocole IP dans un système mobile comportant de multiples terminaux ayant formé, entre eux, au moins un groupe de communication, ainsi qu'au moins un réseau d'accès sans fil et un réseau à commutation de paquets qui lui sont connectés pour transmettre des paquets de données IP entre les terminaux et au moins un serveur commandant la communication vocale de groupe, le système étant agencé pour mettre en oeuvre une conversion du format vocal au format texte, le procédé comprenant les étapes ci-dessous consistant à :
transmettre (302), au moyen d'un terminal appartenant au groupe de communication, une demande d'initiation pour une communication vocale de groupe basée sur le protocole IP audit au moins un serveur commandant la communication vocale de groupe, **caractérisé par** les étapes consistant à
contrôler (322) au moins un paramètre déterminant la situation de charge du réseau d'accès et/ou du réseau à commutation de paquets utilisé(s) par au moins un terminal appartenant au groupe de communication ;
en réponse à au moins un paramètre de détermination de charge dépassant une valeur limite prédéterminée, établir (324 à 332) une connexion de communication au format texte entre le terminal et une unité de serveur fonctionnellement connectée audit au moins un serveur commandant la communication vocale de groupe ;
convertir (334) les paquets vocaux à base de protocole IP adressés au terminal en des messages au format texte ; et
transmettre (336, 338) les messages au format texte en provenance de ladite unité de serveur, par l'intermédiaire d'une connexion de communication au format texte, au terminal.

2. Procédé selon la revendication 1, **caractérisé par** l'étape consistant à
mettre en oeuvre le contrôle (322) de la situation de charge et la conversion (334) des paquets vocaux à base de protocole IP en des messages au format texte dans l'unité de serveur fonctionnellement connectée audit au moins un serveur commandant la communication vocale de groupe.

3. Procédé selon la revendication 1 ou 2, **caractérisé par** l'étape consistant à
stocker, au niveau dudit au moins un serveur commandant la communication vocale de groupe, un paramétrage défini par l'utilisateur de terminal selon lequel les paquets vocaux à base de protocole IP peuvent être convertis en des messages au format texte sur les connexions de communication vocale de groupe du terminal.

4. Procédé selon la revendication 1 ou 2, **caractérisé par** l'étape consistant à stocker, au niveau dudit au moins un serveur commandant la communication vocale de groupe, un paramétrage selon lequel les paquets vocaux à base de protocole IP peuvent être convertis en des messages au format texte sur les connexions de communication vocale de groupe de tous les terminaux.

5. Procédé selon l'une quelconque des revendications précédentes, **caractérisé en ce que**
les messages au format texte sont des messages de messagerie instantanée et la connexion de communication au format texte est une connexion de communication de messagerie instantanée.

6. Procédé selon la revendication 5, **caractérisé par** l'étape consistant à
convertir les paquets vocaux à base de protocole IP en des messages de messagerie instantanée (IM) au format texte par le biais d'un procédé de reconnaissance vocale.

7. Procédé selon la revendication 6, **caractérisé par** l'étape consistant à
établir une session de conversation en ligne à base de messagerie instantanée (IM) à partir de l'unité de serveur avec au moins un terminal appartenant au groupe de communication.

8. Procédé selon la revendication 7, **caractérisé par** les étapes consistant à
convertir les paquets vocaux à base de protocole IP adressés au terminal en des messages de conversation en ligne au format texte dans l'unité de serveur ; et
convertir, dans l'unité de serveur, les messages de conversation en ligne au format texte du terminal en des paquets vocaux à base de protocole IP au moyen d'une synthèse.

9. Procédé selon l'une quelconque des revendications précédentes, **caractérisé par** les étapes consistant à
observer en continu, dans l'unité de serveur, la situation de charge du réseau d'accès et/ou du réseau à commutation de paquets utilisé(s) par au moins un terminal appartenant au groupe de communication ; et
commander dynamiquement la communication vocale de groupe du terminal afin qu'elle ait lieu sous la forme de paquets vocaux à base de protocole IP ou de messages au format texte en réponse à des changements dans la situation de charge sans interrompre la connexion du terminal au groupe de communication.

10. Procédé selon l'une quelconque des revendications précédentes, **caractérisé par** l'étape consistant à
affecter, en réponse aux paquets vocaux à base de protocole IP adressés audit au moins terminal étant convertis (334) en des messages au format texte, une connexion de données à commutation de paquets avec des paramètres de qualité de service (QoS) inférieure pour le terminal.

11. Procédé selon l'une quelconque des revendications précédentes, **caractérisé par** l'étape consistant à :
transmettre aux autres membres du groupe de communication, en tant que des informations de présence d'au moins un terminal du groupe de communication, des informations indiquant que le terminal participe à la communication vocale de groupe avec un message au format texte.

12. Procédé selon l'une quelconque des revendications précédentes, **caractérisé par** l'étape consistant à :
transmettre (302), au moyen du terminal appartenant au groupe de communication, une demande d'initiation d'une communication vocale de groupe basée sur le protocole IP, sous la forme d'un message au format texte, audit au moins un serveur commandant la communication vocale de groupe.

13. Système mobile comportant de multiples terminaux ayant formés, entre eux, au moins un groupe de communication à base de protocole IP pour une communication vocale de groupe, ainsi qu'au moins un réseau d'accès sans fil et un réseau à commutation de paquets qui lui sont connectés pour transmettre des paquets de données IP entre les terminaux et au moins un serveur commandant la communication vocale de groupe, dans lequel système mobile une conversion du format vocal au format texte est agencée,
le terminal appartenant au groupe de communication est agencé pour envoyer (302) une demande d'initiation de communication vocale de groupe basée sur le protocole IP audit au moins un serveur commandant la communication vocale de groupe, **caractérisé en ce que**
le système mobile comprend une unité de serveur fonctionnellement connectée audit au moins un serveur commandant la communication vocale de groupe, l'unité de serveur étant agencée
pour contrôler (322) au moins un paramètre déterminant la situation de charge du réseau d'accès et/ou du réseau à commutation de paquets utilisé(s) par le terminal appartenant au groupe de communication ;
pour établir (324 à 332), en réponse à au moins un paramètre de détermination de charge dépassant une valeur limite prédéterminée, une connexion de communication au format texte au terminal ;
pour convertir (334) les paquets vocaux à base de protocole IP adressés au terminal en des messages au format texte ; et
pour transmettre (336, 338) les messages au format texte, par l'intermédiaire d'une connexion de communication au format texte, au terminal.

14. Système mobile selon la revendication 13, **caractérisé en ce que**
les messages au format texte sont des messages de messagerie instantanée (IM) et la connexion de communication au format texte est une connexion de communication de messagerie instantanée (IM).

15. Système mobile selon la revendication 14, **caractérisé en ce que**
ledit au moins un serveur commandant la communication vocale de groupe est agencé pour stocker un paramétrage défini par l'utilisateur selon lequel les paquets vocaux à base de protocole IP peuvent être convertis en des messages de messagerie instantanée (IM) au format texte sur les connexions de communication vocale de groupe du terminal.

16. Système mobile selon la revendication 14, **caractérisé en ce que**
ledit au moins un serveur commandant la communication vocale de groupe est agencé pour stocker un paramétrage selon lequel les paquets vocaux à base de protocole IP peuvent être convertis en des messages de messagerie instantanée (IM) au format texte sur les connexions de communication vocale de groupe de tous les terminaux.

17. Système mobile selon l'une quelconque des revendications 14 à 16, **caractérisé en ce que**
l'unité de serveur est agencée pour convertir les paquets vocaux à base de protocole IP en des messages de messagerie instantanée (IM) au format texte par le biais d'un procédé de reconnaissance vocale.

18. Système mobile selon l'une quelconque des revendications 14 à 17, **caractérisé en ce que**
l'unité de serveur est agencée pour établir une session de conversation en ligne à base de messagerie instantanée (IM) avec au moins un terminal appartenant au groupe de communication.

19. Système mobile selon la revendication 18, **caractérisé en ce que**
l'unité de serveur est agencée pour convertir les paquets vocaux à base de protocole IP adressés au terminal en des messages de conversation en ligne au format texte ; et
l'unité de serveur est agencée pour convertir les messages de conversation en ligne au format texte en provenance du terminal en des paquets vocaux à base de protocole IP au moyen d'une synthèse.

20. Système mobile selon l'une quelconque des revendications 14 à 19, **caractérisé en ce que** l'unité de serveur est agencée
pour observer en continu au moins une situation de charge du réseau d'accès et/ou du réseau à commutation de paquets utilisé(s) par au moins un terminal appartenant au groupe de communication ; et
pour commander dynamiquement la communication vocale de groupe du terminal afin qu'elle ait lieu sous la forme de paquets vocaux à base de protocole IP ou de messages de messagerie instantanée (IM) au format texte en réponse à des changements dans la situation de charge, sans interrompre la connexion du terminal au groupe de communication.

21. Système mobile selon l'une quelconque des revendications 14 à 20, **caractérisé en ce que,**
en réponse aux paquets vocaux à base de protocole IP, adressés audit au moins terminal, étant convertis (334) en des messages de messagerie instantanée (IM) au format texte ;
le système mobile est agencé pour affecter une connexion de données à commutation de paquets avec des paramètres de qualité de service (QoS) inférieure pour le terminal.

22. Système mobile selon l'une quelconque des revendications 14 à 21, **caractérisé en ce que**
un serveur de présence est agencé en connexion fonctionnelle audit au moins un serveur commandant la communication vocale de groupe, moyennant quoi
ledit au moins un serveur est agencé pour transmettre aux autres membres du groupe de communication, sous la forme d'informations de présence d'au moins un terminal du groupe de communication, des informations indiquant que le terminal participe à la communication vocale de groupe avec un message de messagerie instantanée (IM).

23. Système mobile selon l'une quelconque des revendications 14 à 22, **caractérisé en ce que**
le terminal appartenant au groupe de communication est agencé pour envoyer (302) une demande d'initiation de communication vocale de groupe basée sur le protocole IP sous la forme d'un message de messagerie instantanée (IM) audit au moins un serveur commandant la communication vocale de groupe.

24. Unité de serveur adaptable à un système mobile comportant de multiples terminaux ayant formées, entre eux, au moins un groupe de communication à base de protocole IP pour une communication vocale de groupe, ainsi qu'au moins un réseau d'accès sans fil et un réseau à commutation de paquets qui lui sont connectés pour transmettre des paquets de données IP entre les terminaux et au moins un serveur commandant la communication vocale de groupe, le système étant agencé pour mettre en oeuvre une conversion du format vocal au format texte, **caractérisée en ce que**
l'unité de serveur est fonctionnellement connectable audit au moins un serveur commandant la communication vocale de groupe, et l'unité de serveur est agencée, conjointement avec une communication vocale de groupe basée sur le protocole IP,
pour vérifier (322) au moins un paramètre déterminant la situation de charge du réseau d'accès et/ou du réseau à commutation de paquets utilisé(s) par au moins un terminal appartenant au groupe de communication ;
pour établir (324 à 332), en réponse à au moins un paramètre de détermination de charge dépassant une valeur limite prédéterminée, une connexion de communication au format texte au terminal ;
pour convertir (334) les paquets vocaux à base de protocole IP adressés au terminal en des messages au format texte ; et
pour transmettre (336, 338) les messages au format texte, par l'intermédiaire d'une connexion de communication au format texte, au terminal.

25. Unité de serveur selon la revendication 24, **caractérisée en ce que**
les messages au format texte sont des messages de messagerie instantanée (IM) et la connexion de communication au format texte est une connexion de communication de messagerie instantanée (IM).

26. Unité de serveur selon la revendication 25, **caractérisée en ce que**
l'unité de serveur est agencée pour recevoir, dudit au moins un serveur commandant la communication vocale de groupe, des paramétrages selon lesquels les paquets vocaux à base de protocole IP du terminal utilisé sur les connexions de communication vocale de groupe peuvent être convertis en des messages de messagerie instantanée (IM) au format texte.

27. Unité de serveur selon la revendication 25 ou 26, **caractérisée en ce que**
l'unité de serveur est agencée pour convertir les paquets vocaux à base de protocole IP en des messages de messagerie instantanée (IM) au format texte par le biais d'un procédé de reconnaissance vocale.

28. Unité de serveur selon l'une quelconque des revendications 25 à 27, **caractérisée en ce que**
l'unité de serveur est agencée pour établir une session de conversation en ligne à base de messagerie instantanée (IM) avec au moins un terminal appartenant au groupe de communication.

29. Unité de serveur selon la revendication 28, **caractérisée en ce que**
l'unité de serveur est agencée pour convertir les paquets vocaux à base de protocole IP adressés au terminal en des messages de conversation en ligne au format texte ; et
l'unité de serveur est agencée pour convertir les messages de conversation en ligne au format texte du terminal en des paquets vocaux à base de protocole IP au moyen d'une synthèse.

30. Unité de serveur selon l'une quelconque des revendications 24 à 29, **caractérisée en ce que** l'unité de serveur est agencée
pour observer en continu au moins une situation de charge du réseau d'accès et/ou du réseau à commutation de paquets utilisé(s) par au moins un terminal appartenant au groupe de communication ; et
pour commander dynamiquement la communication vocale de groupe du terminal afin qu'elle ait lieu sous la forme de paquets vocaux à base de protocole IP ou de messages de messagerie instantanée (IM) au format texte en réponse à des changements dans la situation de charge, sans interrompre la connexion du terminal au groupe de communication.

31. Produit programme informatique pour commander une unité de serveur conjointement avec une communication vocale de groupe basée sur le protocole IP, étant adaptable à un système mobile comportant de multiples terminaux ayant formé, entre eux, au moins un groupe de communication à base de protocole IP pour une communication vocale de groupe, ainsi qu'au moins un réseau d'accès sans fil et un réseau à commutation de paquets qui lui sont connectés pour transmettre des paquets de données IP entre les terminaux et au moins un serveur commandant la communication vocale de groupe, le système étant agencé pour mettre en oeuvre une conversion du format vocal au format texte, **caractérisé en ce que** le produit programme informatique comprend
un code de programme informatique pour connecter l'unité de serveur fonctionnellement audit au moins un serveur commandant la communication vocale de groupe ;
un code de programme informatique pour contrôler au moins un paramètre déterminant la situation de charge du réseau d'accès et/ou du réseau à commutation de paquets utilisé(s) par le terminal appartenant au groupe de communication comportant de multiples terminaux ;
un code de programme informatique, lequel est exploité en réponse à au moins un paramètre de détermination de charge dépassant une valeur limite prédéterminée, en vue d'établir une connexion de communication au format texte au niveau du terminal ;
un code de programme informatique pour convertir les paquets vocaux à base de protocole IP adressés au terminal en des messages au format texte ; et
un code de programme informatique pour transmettre les messages au format texte, par l'intermédiaire d'une connexion de communication au format texte, au terminal.
